# EUROPEAN PATENT SPECIFICATION

(11) **EP 2 675 198 B1**
(45) Date of publication and mention of the grant of the patent: **02.11.2016**
(21) Application number: 12777281.2
(22) Date of filing: 28.04.2012
(51) Int. Cl.: H04W 4/18, H04W 4/20, H04W 28/16, H04W 72/12

(54) **METHOD AND DEVICE FOR SENDING AND RECEIVING CONTROL SIGNALLING**
VERFAHREN UND VORRICHTUNG ZUM SENDEN UND EMPFANGEN VON KONTROLLSIGNALEN
PROCÉDÉ ET DISPOSITIF D'ENVOI ET DE RÉCEPTION DE SIGNALISATION DE COMMANDE

(30) Priority: 29.04.2011 CN 201110111367
(43) Date of publication of application: 18.12.2013
(60) Divisional application: 16183920.4
(73) Proprietor: Huawei Technologies Co., Ltd., Longgang District Shenzhen, Guangdong 518129 (CN)
(72) Inventor: GAO, Chi, Shenzhen Guangdong 518129 (CN); MAZZARESE, David, Shenzhen Guangdong 518129 (CN)
(74) Representative: Körber, Martin Hans
(86) International application number: PCT/CN2012/074921
(87) International publication number: WO 2012/146211

(56) References cited:
- EP-A2- 2 182 689
- WO-A2-2010/050784
- CN-A- 101 605 375
- CN-A- 101 764 642
- QUALCOMM EUROPE: "Padding one bit to DCI format 1B when fomat 1A and fomat 1B have the same size", 3GPP DRAFT; R1-083172 PADDING ONE BIT TO DCI FORMAT 1B WHEN FOMAT 1A AND FOMAT 1B HAVE THE SAME SIZE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20080818 - 20080822, 12 August 2008 (2008-08-12), XP050596948, [retrieved on 2008-08-12]
- NOKIA ET AL: "Handling DCI formats and blind decoding in LTE-Advanced", 3GPP DRAFT; R1-091364 HANDLING DCI FORMATS AND BLIND DECODING IN LTE-ADVANCED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20090323 - 20090327, 18 March 2009 (2009-03-18), XP050597331, [retrieved on 2009-03-18]
- "LTE; Evolved Universal Terrestrial Radio Access (E-UTRA); Physical layer procedures (3GPP TS 36.213 version 10.0.1 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 1, no. V10.0.1, 1 January 2011 (2011-01-01), XP014062132,
- HUAWEI ET AL: "Ambiguity of DCI format 4 and 1/2/2A/2B/2C detection", 3GPP DRAFT; R1-111821 AMBIGUITY OF DCI FORMAT 4 AND 1 2 2A 2B 2C DETECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Barcelona, Spain; 20110509, 16 May 2011 (2011-05-16), XP050491504, [retrieved on 2011-05-16]

## Description

### TECHNICAL FIELD

The present invention relates to the field of mobile communications technologies, and in particular to a method and a device for transmitting and receiving control signaling.

### BACKGROUND

In a long term evolution (Long Term Evolution, LTE) system, uplink and downlink transmission methods are determined by a base station. The base station notifies a terminal of an uplink and/or downlink transmission method through a downlink channel. A specific transmission method includes transmission mode (Transmission Mode, TM), resource allocation information, a modulation and coding scheme, and so on. Some transmission methods are notified in a semi-static way. For example, the TM is notified through higher-layer signaling. Some transmission methods are notified in a dynamic way. For example, the resource allocation information and the modulation and coding scheme are notified through physical-layer downlink control information (Downlink Control Information, DCI).

Different unlink or downlink TMs correspond to different DCI formats. For example, if a TM 4, that is, multi-antenna closed-loop multiplexing transmission mode, is used for LTE downlink transmission, the DCI format for notifying the corresponding transmission method is format 1A or format 2. For another example, if a TM 2, that is, multi-antenna transmission mode, is used for LTE uplink transmission, the DCI format for notifying the corresponding transmission method is format 0 or format 4.

A terminal needs to detect a DCI format that may be on a physical downlink control channel (Physical Downlink Control Channel, PDCCH) by means of blind detection. For example, for downlink TM 4, DCI format 1A or format 2 may be on the PDCCH; and for plink TM 2, DCI format 0 or format 4 may be on the PDCCH. If a base station configures TM 4 for downlink transmission and TM 2 for uplink transmission, DCI format 1A, format 2, format 0, or format 4 may be on the PDCCH. The terminal distinguishes DCI formats according to sizes of the DCI formats during the blind detection. For example, it is assumed that under a current configuration, the size of format 1A is 30 bits, the size of format 2 is 34 bits, and the size of the format 4 is 34 bits. If DCI with a length of 30 bits is detected during the blind detection, the terminal can determine that the current detected DCI format is the format 1A, and can interpret control information in the DCI according to a definition of the format 1A. However, if DCI with a length of 34 bits is detected, the terminal cannot determine whether the DCI format is format 2 or the format 4. As a result, the terminal cannot detect the DCI format correctly during the blind detection, and cannot obtain a correct uplink or downlink control transmission method. If a correct downlink control transmission method cannot be obtained, downlink data cannot be decoded correctly. If a correct uplink control transmission method cannot be obtained, uplink data cannot be transmitted correctly.

QUALCOMM EUROPE: "Padding one bit to DCI format 1B when format 1A and format 1B have the same size", 3GPP DRAFT; R1-083172 discloses that format 1B is for DL assignment only, and as a result, it is only a function of DL system bandwidth. Format 1A is dependent on both DL and UL system bandwidths. In case that DL and UL system bandwidths are asymmetric, format 1A and format 1B may have the same size.

### SUMMARY

Embodiments of the present invention provide a method, a device and a computer program for transmitting control signaling, through which various DCI formats may be distinguished from each other. Therefore, the DCI formats can be correctly and easily detected with a relative small overhead during blind detection. The present invention is defined by the appended independent claims.

An embodiment of the present invention provides a method for transmitting control signaling according to claim 1.

Another embodiment of the present invention provides a device for transmitting control signaling according to claim 7.

Still another embodiment of the present invention provides a computer program according to claim 13.

It may be known from the foregoing technical solutions that, in the embodiments of the present invention, the second group of DCI formats corresponding to the current transmission configuration is determined according to the current transmission configuration, the size of a DCI format in the second group is compared with the original size of a DCI format in the first group. When the second group includes a DCI format that has a same size as a DCI format in the first DCI, a bit is appended to the corresponding DCI format in the first group that has the same size as the DCI format in the second group, so that the size of the DCI format in the second group is different from that of the compared DCI format in the first group. As a result, sizes of DCI formats corresponding to the current transmission configuration rather than DCI formats under all transmission configurations are differentiated. Therefore, the various DCI formats under the current transmission configuration may be easily distinguished with a relative small additional overhead. Therefore, the DCI formats can be correctly detected during blind detection.

### BRIEF DESCRIPTION OF DRAWINGS

To illustrate the technical solutions in the embodiments of the present invention more clearly, accompanying drawings for describing the embodiments are briefly introduced in the following. Apparently, the accompanying drawings in the following description are some embodiments of the present invention. A person skilled in the art may further obtain other drawings according to these accompanying drawings without creative efforts.
FIG. 1 is a schematic flowchart of a method according to a first embodiment of the present invention;
FIG. 2 is a schematic flowchart of a method according to a second embodiment of the present invention;
FIG. 3 is a schematic flowchart of a method according to a third embodiment of the present
   invention;
FIG. 4 is a schematic flowchart of a method according to a fourth embodiment of the present invention;
FIG. 5 is a schematic structural diagram of a device according to a fifth embodiment of the present invention; and
FIG. 6 is a schematic structural diagram of a device according to a sixth embodiment of the present invention.

### DESCRIPTION OF EMBODIMENTS

In order to make the objectives, technical solutions, and advantages of the present invention clearer, the technical solutions in the embodiments of the present invention are described in detail below with reference to the accompanying drawings. Apparently, these embodiments are merely part rather than all of the embodiments of the present invention. All other embodiments obtained by a person skilled in the art based on these embodiments without creative effects shall fall within the protection scope of the present invention.

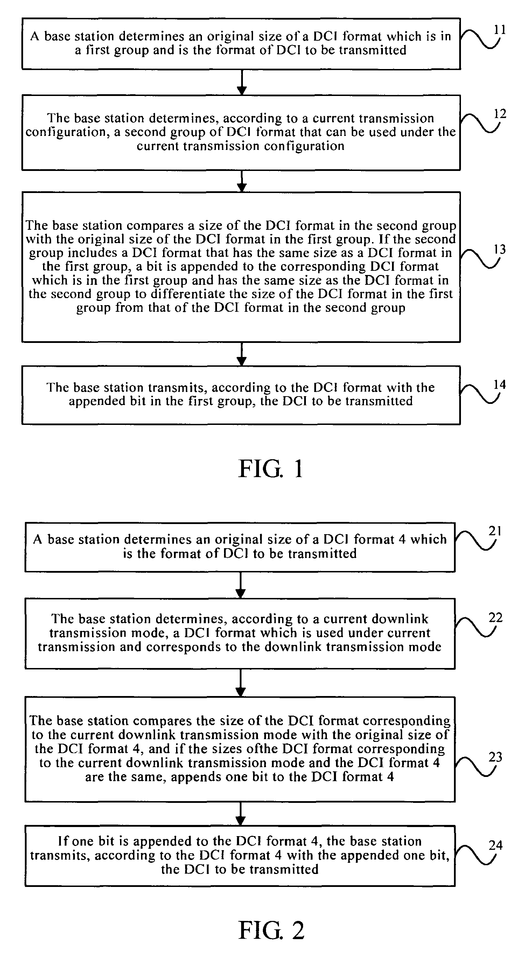

FIG. 1 shows a schematic flowchart of a method according to a first embodiment of the present invention. The method includes:
Step 11: A base station determines an original size of a DCI format which is in a first group of DCI formats and is the format of DCI to be transmitted.

The original size of the DCI format in the first group may be determined according to at least one of the following items: uplink and downlink duplex configuration, such as frequency division duplex (Frequency Division Duplex, FDD); system bandwidth; cross-carrier scheduling configuration; the number of transmit antennas; and transmission in a single cell or in multiple cells.

The size of a certain DCI format varies under different configurations. Tables 1-3 show the sizes of format 2, format 2C, and format 4 under various configurations respectively in the situation of FDD and a 1.4 Mbit/s bandwidth.

**Table 1**

| DCI type | Parameter configuration | | Size of the DCI format under a 1.4 Mbit/s bandwidth |
|---|---|---|---|
| Format 2 | Cross-carrier | Downlink transmission with | 34 |
| | scheduling | two transmit antennas | |
| | | Downlink transmission with four transmit antennas | 37 |
| | No cross-carrier scheduling | Downlink transmission with two transmit antennas | 31 |
| | | Downlink transmission with four transmit antennas | 34 |

**Table 2**

| DCI type | Parameter configuration | Size of the DCI format under a 1.4 Mbit/s bandwidth |
|---|---|---|
| Format 2C | Cross-carrier scheduling | 33 |
| | No cross-carrier scheduling | 30 |

**Table 3**

| DCI type | Parameter configuration | | | Size of the DCI format under a 1.4 Mbit/s bandwidth |
|---|---|---|---|---|
| Format 4 | Cross-carrier scheduling | Multiple downlink cells | Uplink transmission with two transmit antennas | 34 |
| | | | Uplink transmission with four transmit antennas | 37 |
| | No cross-carrier scheduling | A single downlink cell | Uplink transmission with two transmit antennas | 30 |
| | | | Uplink transmission with four transmit antennas | 33 |
| | | Multiple downlink cells | Uplink transmission with two transmit antennas | 31 |
| | | | Uplink transmission with four transmit antennas | 34 |

For example, the DCI format in the first group is the format 4, and its original size is 34 bits under the following configuration: FDD, a bandwidth of 1.4 Mbit/s, cross-carrier scheduling, multiple downlink cells, and two uplink transmission antennas.

Step 12: The base station determines, according to a current transmission configuration, a second group of DCI formats that can be used under the current transmission configuration.

The second group of DCI formats that can be used under the current transmission mode may be determined according to a transmission mode. The transmission mode may be at least one of an uplink transmission mode and a downlink transmission mode.

The uplink transmission mode may include at least one of TM 1 and TM 2. The downlink transmission mode may include at least one of TM 3, TM 4, TM 8, and TM 9.

For example, for downlink TM 4, the second group of DCI formats may include DCI format 1A and DCI format 2; for uplink TM 2, the second group of DCI formats may include DCI format 0 and DCI format 4.

In addition, the DCI format in the first group may be a DCI format for notifying the uplink transmission mode, and the DCI format in the second group may be for notifying the downlink transmission mode. Alternatively, the DCI format in the first group of DCI format may be for notifying the downlink transmission mode, and the DCI format in the second group may be for notifying the uplink transmission mode.

Specifically, the first group of DCI formats includes the format 4, and the second group of DCI formats includes format 2, format 2A, format 2B, or format 2C. Or, the first group of DCI formats includes format 2, format 2A, format 2B, or format 2C, and the second group of DCI formats includes format 4.

Step 13: The base station compares a size of a DCI format in the second group with the original size of a DCI format in the first group. If the second group includes a DCI format that has the same size as a DCI format in the first group, a bit is appended to the corresponding DCI format which is in the first group and has the same size as a DCI format in the second group to differentiate the size of the DCI format in the first group from that of the DCI format in the second group.

The bit appending may be: one bit is appended to the DCI format in the first group that has the same size as a DCI format in the second group, and if after the bit appending, the corresponding DCI format in the first group still has the same size as another DCI format in the second group, another bit is further appended to this DCI format in the first group until it is different from that of the DCI format in the second group. That is, one bit is appended each time to the DCI format in the first group that has the same size as a DCI format in the second group, until the size of the DCI format in the first group after the bit appending is different from that of the DCI format in the second group. For example, the first group of DCI formats includes DCI format X, and a size of the DCI format X is n0 bits. If the second group of DCI formats includes a DCI format with a size of n0 bits, increase the size of the DCI format X by appending one bit to the DCI format X. That is, the size of the DCI format X with the appended one bit is n0+1 bits. If the second group of DCI formats includes a DCI format with a size of n0+1 bits, increase the size of the DCI format X by another one bit to make the size of the DCI format X as n+2 bits. The rest may be deduced by analogy until no DCI format in the second group has the same size with the DCI format in the first group.

The foregoing appended bit may be 0 or 1. In addition, if more than one bit is appended, the appended bits may all be 0 or 1, or part of the appended bits may be 0 and the other part may be 1.

Particularly, the value of the appended bit is informed in advance to the base station and the terminal, for example, through pre-configuration or signaling notification.

In addition, if the second group does not include a DCI format that has the same size of a DCI format in the first group, no bit is appended to the DCI format in the first group.

Step 14: The base station transmits, according to the DCI format with the appended bit in the first group, the DCI to be transmitted.

In this embodiment, the second group of DCI formats that is used under the current transmission configuration is determined according to the current transmission configuration, the size of the DCI format in the second group is compared with the original size of the DCI format in the first group. When the second group includes a DCI format that has the same size of a DCI format in the first group, a bit is appended to the corresponding DCI format in the first group that has the same size as a DCI format in the second group, so that the size of the DCI format in the second group is different from that of the compared DCI format in the first group. As a result, the sizes of DCI formats under the current transmission configuration rather than DCI formats under all transmission configurations are differentiated. Therefore, the various DCI formats under the current transmission configuration can be easily distinguished with a relative small additional overhead.

FIG. 2 is a schematic flowchart of a method according to a second embodiment of the present invention. In this embodiment, the situation that a first group of DCI formats comprises a DCI format for notifying an uplink transmission method and a second group of DCI formats comprises a DCI format for notifying a downlink transmission method is taken as an example. As show in FIG. 2, the method in this embodiment includes:
Step 21: A base station determines an original size of DCI format 4 which is the format of DCI to be transmitted.

For example, the original size of the DCI format 4 is 34 bits under the following configuration: FDD, a bandwidth of 1.4 Mbit/s, cross-carrier scheduling, multiple downlink cells, and two uplink transmit antennas.

Step 22: The base station determines, according to a current downlink transmission mode, a DCI format which is used under current transmission and corresponds to the downlink transmission mode.

For example, if the current downlink transmission mode is TM 3, the determined DCI format corresponding to the current downlink transmission mode is DCI format 2A. If the current downlink transmission mode is TM 4, the determined DCI format corresponding to the downlink transmission mode is DCI format 2. If the current downlink transmission mode is TM 8, the DCI format corresponding to the current downlink transmission mode is DCI format 2B; and if the current downlink transmission mode is TM 9, the DCI format corresponding to the current downlink transmission mode is DCI format 2C.

Step 23: The base station compares the size of the DCI format corresponding to the current downlink transmission mode with the original size of the DCI format 4, and if the sizes of the DCI format corresponding to the current downlink transmission mode and the DCI format 4 are the same, appends one bit to the DCI format 4.

For example, the DCI format corresponding to the downlink transmission mode is represented as DCI format 2X. The DCI format 2X is one of the DCI format 2, the DCI format 2A, the DCI format 2B, and the DCI format 2C. If the size of the DCI format 2X and the original size of the DCI format 4 are the same, increase the size of the DCI format 4 by one bit.

In addition, if the DCI format 2X does not exist, or if the size of the DCI format 2X and the original size of the DCI format 4 are different, no bit is appended to the DCI format 4.

For example, assuming that the current transmission mode is the TM 9, the DCI format that has the same size as the DCI format 4 is the DCI format 2C. If the DCI format 2C exists, and a size of the DCI format 2C and the original size of the DCI format 4 are the same under the current configuration, one bit is appended to the DCI format 4. If the DCI format 2C does not exist, or if under the current configuration, the size of the DCI format 2C is different from the original size of the DCI format 4, no bit is appended to the DCI format 4.

Step 24: If one bit is appended to the DCI format 4, the base station transmits, according to the DCI format 4 with the appended one bit, the DCI to be transmitted.

In this embodiment, when the first group includes a DCI format that has a same size as a DCI format in the second group under the current transmission configuration, one bit is appended to the DCI format in the first group that has the same size as a DCI format in the second group to distinguish the various DCI formats. As a result, a terminal can correctly process downlink or uplink data. According to this embodiment, when DCI formats are distinguished, the DCI formats under the current transmission configuration rather than DCI formats of all transmission modes and under all transmission configurations are distinguished. Therefore, the number of the appended bits to distinguish the DCI formats may be effectively reduced, times for comparing the sizes of different formats are decreased, and the complexity of processing in the base station and the terminal is decreased.

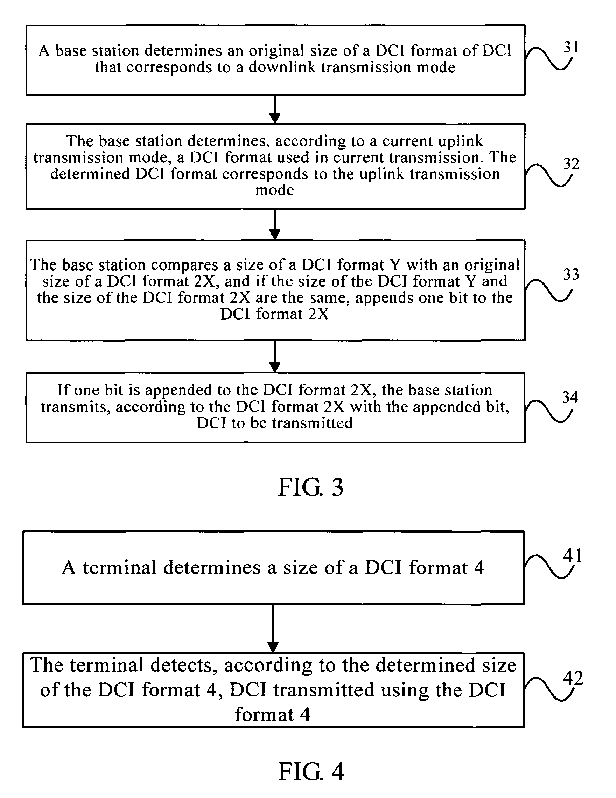

FIG. 3 is a schematic flowchart of a method according to a third embodiment of the present invention. This embodiment takes the situation that a first group of DCI formats comprises a DCI format for notifying a downlink transmission method and a second group of DCI formats comprises a DCI format for notifying an uplink transmission method as an example. As show in FIG. 3, this embodiment includes:
Step 31: A base station determines an original size of a DCI format that corresponds to a downlink transmission mode.

The DCI format of the DCI that corresponds to the downlink transmission mode may be represented as DCI format 2X, which is DCI format 2, DCI format 2A, DCI format 2B, or DCI format 2C.

Step 32: The base station determines, according to a current uplink transmission mode, a DCI format used in current transmission. The determined DCI format corresponds to the uplink transmission mode.

For example, if the current uplink transmission mode is TM 2, the DCI format corresponding to the uplink transmission mode is represented as DCI format Y. Specifically, the DCI format Y may be DCI format 4.

Step 33: The base station compares a size of the DCI format Y with the original size of the DCI format 2X, and if the size of the DCI format Y and the size of the DCI format 2X are the same, appends one bit to the DCI format 2X.

In addition, if the DCI format Y does not exist, or if the size of the DCI format Y and the size of the DCI format 2X are different, no bit is appended to the DCI format 2X.

For example, a current DCI format 2X is the format 2, and assuming that current uplink transmission mode is TM 2, it can be determined that the DCI format 4 may exist currently. If a size of the DCI format 4 and an original size of the DCI format 2 are the same, one bit is appended to the DCI format 2. Assume that the uplink transmission mode is an uplink TM 1, after it is determined that there is no DCI format that has the same size as the DCI format 2, or that the size of the DCI format 4 and the original size of the DCI format 2 are different under the current transmission configuration, no bit is appended to the format 2.

Step 34: If one bit is appended to the DCI format 2X, the base station transmits, according to the DCI format 2X with the appended bit, DCI to be transmitted.

In this embodiment, when the first group includes a DCI format that has the same size as a DCI format in the second group under the current transmission configuration, one bit is appended to the corresponding DCI format in the first group that has the same size as a DCI format in the second group to distinguish various DCI formats, so that a terminal may correctly process downlink or uplink data. According to this embodiment, when DCI formats are distinguished, the DCI formats under the current transmission configuration rather than DCI formats of all transmission modes and under all transmission configurations are distinguished. Therefore, the number of appended bits may be effectively reduced, times for comparing sizes of different formats are decreased, and the complexity of processing in the base station and the terminal is decreased.

FIG. 4 is a schematic flowchart of a method according to a fourth embodiment of the present invention. The method includes:
Step 41: A terminal determines a size of DCI format 4.

The determination of the size of the DCI format 4 includes:
A first step: determining an original size of the DCI format 4.
A second step: determining, according to a current downlink transmission mode, a DCI format corresponding to the downlink transmission mode.
   For example, if the current downlink transmission mode is TM 3, the DCI format which corresponds to the downlink transmission mode and is used for the current transmission is DCI format 2A. If the current downlink transmission mode is TM 4, the DCI format which corresponds to the downlink transmission mode for the current transmission is DCI format 2. If the current downlink transmission mode is TM 8, the DCI format which corresponds to the downlink transmission mode for the current transmission is DCI format 2B. If the current downlink transmission mode is TM 9, the DCI format which corresponds to the downlink transmission mode for the current transmission is DCI format 2C. That is, the DCI format corresponding to the downlink transmission mode includes the format 2, the format 2A, the format 2B, or the format 2C.
A third step: comparing a size of the DCI format corresponding to the downlink transmission mode with the original size of the DCI format 4, and if the DCI format corresponding to the downlink transmission mode and the DCI format 4 have the same size, appending a bit to the DCI format 4 to make the size of the DCI format 4 with the appended bit different from that of the DCI format corresponding to the downlink transmission mode; and determining that the size of the DCI format 4 is the original size of the DCI format 4 plus the appended bit. The appending of a bit to the DCI format 4 to differentiate the size of the DCI format 4 from that of the DCI format corresponding to the downlink transmission mode may be as follows: one bit is appended each time to the DCI format 4 until a size of the DCI format 4 is different from that of the DCI format corresponding to the downlink transmission mode. A value of the bit appended to the DCI format 4 may be 0 or 1.

Step 42: The terminal detects, according to the determined size of the DCI format 4, DCI transmitted using the DCI format 4.

For example, according to a configured size of the DCI format 4, the DCI corresponding to the format 4 is detected on downlink control signaling by using a blind detection.

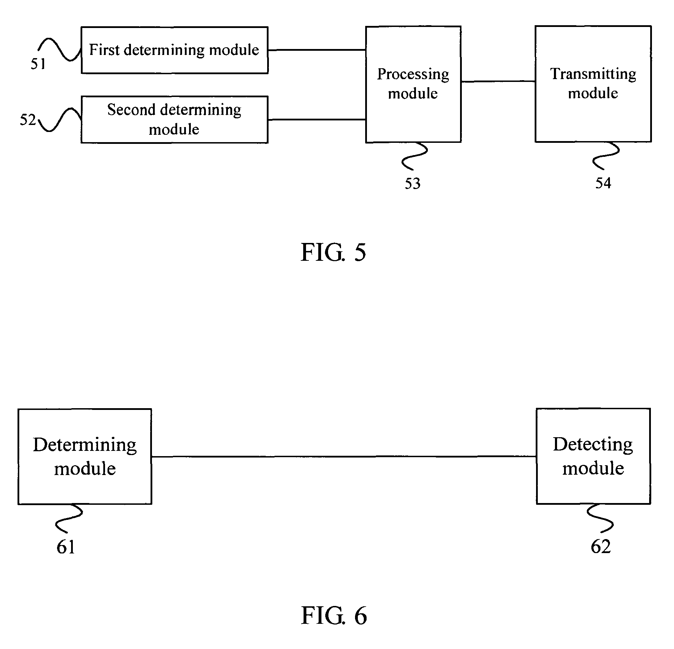

In this embodiment, the second group of DCI formats used under the current transmission configuration is determined according to the current transmission configuration, the size of the DCI format in the second group is compared with the original size of the DCI format in a first group. When the second group includes a DCI format with a same size as a DCI format in the first group, a bit is appended to the corresponding DCI format in the first group that has the same size as a DCI format in the second group, so that the size of the DCI format in the second group is different from that of the DCI format in the first group. As a result, the sizes of the DCI formats under the current transmission configuration rather than the DCI formats under all transmission configurations are differentiated. Therefore, the various DCI formats under the current transmission configuration may be easily distinguished with a relative small overhead. FIG. 5 is a schematic structural diagram of a device according to a fifth embodiment of the present invention. The device includes a first determining module 51, a second determining module 52, a processing module 53, and a transmitting module 54. The first determining module 51 is configured to determine an original size of a DCI format which is in a first group and is the format of DCI to be transmitted. The second determining module 52 is configured to determine, according to a current transmission configuration, a second group of DCI formats that can be used under the current transmission configuration, and determine a size of the DCI format in the second group. The processing module 53 is configured to compare the determined size of the DCI format in the second group by the second determining module 52 with the original size of the DCI format in the first group, where the original size of the DCI format in the first group is determined by the first determining module 51, and to append, if the second group includes a DCI format with a same size as the DCI format in the first group, a bit to the DCI format in the first group that has the same size as a DCI format in the second group so that the size of the DCI format in the first group after the bit appending is different from that of the DCI format in the second group. The transmitting module 54 is configured to transmit, according to the first group DCI format with the appended bit, which is obtained by the processing module 53, the DCI to be transmitted.

The second determining module 52 may be specifically configured to determine, according to a transmission mode, the second group of DCI formats that can be used under the current transmission mode. The transmission mode is at least one of an uplink transmission mode and a downlink transmission mode.

The first determining module 51 may be specifically configured to determine the original size of the DCI format which is in the first group and is the format of the DCI to be transmitted, according to at least one of uplink and downlink duplex configuration, system bandwidth, cross-carrier scheduling configuration, the number of transmitting antennas, and transmission in a single cell or in multiple cells.

The processing module 53 may be specifically configured to append a bit whose value is 0 or append a bit whose value is 1 to the DCI format which is in the first group and has the same size as a DCI format in the second group.

The processing module 53 may be specifically configured to compare the size of the DCI format in the second group with the original size of the DCI format in the first group, and append, if the second group includes a DCI format with a same size as a DCI format in the first group, one bit is appended each time to the DCI format in the first group that has the same size as a DCI format in the second group until the size of the DCI format in the first group after the bit appending is different from the size of any DCI format in the second group.

The processing module 53 may also be configured not to append, if no IDC format in the second group has the same size as the DCI format in the first group bit to the DCI format in the first group.

Particularly, the first determining module 51 is specifically configured to determine an original size of a DCI format 4 which is the format of the DCI to be transmitted. The second determining module 52 is specifically configured to determine, according to a current downlink transmission mode, a DCI format corresponding to the downlink transmission mode. The processing module 53 is specifically configured to compare a size of the DCI format corresponding to the downlink transmission mode with the original size of the DCI format 4, and append, if the DCI format corresponding to the downlink transmission mode and the DCI format 4 have the same size, a bit to the DCI format 4 to differentiate the size of the DCI format 4 from that of the DCI format corresponding to the downlink transmission mode. The transmitting module 54 is specifically configured to transmit, according to the DCI format 4 after the bit appending, the DCI to be transmitted.

The second determining module 52 may be specifically configured to determine that a second group of DCI formats that can be used under the current transmission configuration includes format 2, format 2A, format 2B, or format 2C.

The second determining module 52 may be specifically configured to: if the current downlink transmission mode is a TM 3, determine that the DCI format corresponding to the downlink transmission mode is a DCI format 2A; if the current downlink transmission mode is a TM 4, determine that the DCI format corresponding to the downlink transmission mode is a DCI format 2; if the current downlink transmission mode is a TM 8, determine that the DCI format corresponding to the downlink transmission mode is a DCI format 2B; if the current downlink transmission mode is a TM 9, determine that the DCI format corresponding to the downlink transmission mode is a DCI format 2C.

In this embodiment, the second group of DCI formats used under the current transmission configuration is determined according to the current transmission configuration, the size of the DCI format in the second group is compared with the original size of the DCI format in the first group, and when the second group includes a DCI format with the same size as a DCI format in the first group, a bit is appended to the corresponding DCI format in the first group, so that the size of the DCI format in the second group is different from that of the DCI format in the first group. As a result, the sizes of the DCI formats used under the current transmission configuration rather than DCI formats under all transmission configurations are differentiated. Therefore, various DCI formats under the current transmission configuration may be easily distinguished with a relative small overhead.

FIG. 6 is a schematic structural diagram of a device according to a sixth embodiment of the present invention. The device includes a determining module 61 and a detecting module 62. The determining module 61 is configured to determine a size of a DCI format 4. The determination of the size of the DCI format 4 includes: determining an original size of the DCI format 4; and determining, according to a current downlink transmission mode, a DCI format corresponding to the downlink transmission mode; comparing a size of the DCI format corresponding to the downlink transmission mode with the original size of the DCI format 4, and appending, if the DCI format corresponding to the downlink transmission mode and the DCI format 4 have the same size, a bit to the DCI format 4, so that the size of the DCI format 4 with the appended bit is different from that of the DCI format corresponding to the downlink transmission mode; and determining that the size of the DCI format 4 is the original size of the DCI format 4 plus the appended bit. The detection module 62 is configured to detect, according to the DCI format 4's size determined by the determining module 61, DCI that uses the DCI format 4.

The determining module 61 is specifically configured to append a bit whose value is 0 or append a bit whose value is 1 to the DCI format 4.

The determining module is specifically configured to determine the DCI format which corresponds to the downlink transmission mode and includes a format 2, a format 2A, a format 2B or a format 2C.

The determining module 61 may include a first unit configured to append a bit to the original size of the DCI format 4, so that the size of the DCI format 4 after the bit appending is different from that of the DCI format corresponding to the downlink transmission mode. The first unit is configured to append one bit each time to the DCI format 4 until the size of the DCI format 4 after bit appending is different from that of the DCI format corresponding to the downlink transmission mode.

The determining module 61 may include a second unit configured to determine, according to the current downlink transmission mode, the DCI format corresponding to the downlink transmission mode. The second unit is configured to: if the downlink transmission mode is a downlink transmission TM 3, determine that the DCI format corresponding to the downlink transmission mode is a DCI format 2A; if the downlink transmission mode is a TM 4, determine that the DCI format corresponding to the downlink transmission mode is a DCI format 2; if the downlink transmission mode is a TM 8, determine that the DCI format corresponding to the downlink transmission mode is a DCI format 2B; if the downlink transmission mode is a TM 9, determine that the DCI format corresponding to the downlink transmission mode is a DCI format 2C.

In this embodiment, the second group of DCI formats used under the current transmission configuration is determined according to the current transmission configuration, the size of the DCI format in the second group is compared with the original size of the DCI format in a first group, and when the second group includes a DCI format with the same size as a DCI format in the first group, a bit is appended to the corresponding DCI format in the first group that has the same size as a DCI format in the second group, so that the size of the DCI format in the second group is different from that of the compared DCI format in the first group. As a result, the sizes of the DCI formats used under the current transmission configuration rather than DCI formats under all transmission configurations are different. Therefore, various DCI formats under the current transmission configuration may be easily distinguished with a relatively small overhead. It may be understood that, the features in the foregoing methods and devices may be referenced mutually. In addition, "first" and "second" in the foregoing embodiments are used to distinguish the embodiments, but do not represent preference of the embodiments.

A person skilled in the art should understand that all or part of the steps of the foregoing method embodiments may be implemented by a program instructing relevant hardware. The program may be stored in a computer readable storage medium. When the program is executed, the steps of the foregoing method embodiments are performed. The storage medium includes any medium capable of storing program codes, such as a ROM, a RAM, a magnetic disk, or an optical disk. Finally, it should be noted that the foregoing embodiments are intended to describe the technical solutions of the present invention, other than to limit the present invention. Although the present invention is described in detail with reference to the foregoing embodiments, a person skill in the art should understand that other modifications or equivalent replacements to part of the technical features can be made based on the foregoing embodiments, without departing from the scope of the present invention.

## Claims

1. A method for transmitting control signaling, the method comprising:
determining (11, 21, 31), by a base station, a size of a first downlink control information, DCI, format associated with an uplink transmission mode;
determining (12, 22, 32), by the base station, a second DCI format corresponding to a current downlink transmission mode;
determining, by the base station, a size of the determined second DCI format;
comparing (13, 23, 33), by the base station, the size of the first DCI format with the size of the second DCI format, wherein the first DCI format associated with the uplink transmission mode is a DCI format 4, the uplink transmission mode is transmission mode 2 which is a multi-antenna mode, and the second DCI format corresponding to the current downlink transmission mode is a DCI format 2, or a DCI format 2A, or a DCI format 2B, or a DCI format 2C; and
appending (13, 23, 33), by the base station, at least one bit to the first DCI format associated with the uplink transmission mode to make the size of the first DCI format different from the size of the second DCI format, when the size of the first DCI format is same as the size of the second DCI format.

2. The method according to claim 1, wherein the appending comprises: appending one bit to the first DCI format.

3. The method according to claim 2, wherein the value of the bit appended to the first DCI format is 0.

4. The method according to any one of claims 1-3, further comprising:
transmitting (14, 24, 34), by the base station, control information by using the first DCI format with the appended bit.

5. The method according to claim any one of claims 1-4, wherein the determining (12, 22, 32), by the base station, a second DCI format corresponding to a current downlink transmission mode comprises:
determining that the second DCI format is DCI format 2A, if the current downlink transmission mode is transmission mode 3;
determining that the second DCI format is DCI format 2, if the current downlink transmission mode is transmission mode 4;
determining that the second DCI format is DCI format 2B, if the current downlink transmission mode is transmission mode 8; or
determining that the second DCI format is DCI format 2C, if the current downlink transmission mode is transmission mode 9.

6. The method according to any one of claims 1-5, wherein when the size of the first DCI format with the appended bit is equal to a size of another DCI format corresponding to the current downlink transmission mode, the method further comprises:
appending, by the base station, another at least one bit to the first DCI format until the size of the DCI format with the appended bit is different from the size of said another DCI format corresponding to the current downlink transmission mode.

7. A base station comprising:
a first determining module (51) configured to determine a size of a first downlink control information, DCI, format associated with an uplink transmission mode;
a second determining module (52) configured to determining, according to a current downlink transmission mode, a second DCI format that corrresponds to the current downlink transmission mode, and to determine a size of the second DCI format; and
a processing module (53) configured to compare the size of the first DCI format with the size of the second DCI format, wherein the first DCI format associated with the uplink transmission mode is a DCI format 4, the uplink transmission mode is transmission mode 2 which is a multi-antenna mode, and the second DCI format corresponding to the current downlink transmission mode is a DCI format 2, or a DCI format 2A, or a DCI format 2B, or a DCI format 2C; and to append, when the size of the first DCI format is same as the size of the second DCI format, at least one bit to the first DCI format associated with the uplink transmission mode to make the size of the first DCI format different from the size of the second DCI format.

8. The base station according to claim 7, wherein in the appending action, the base station is configured to append one bit to the first DCI format.

9. The base station according to claim 8, wherein a value of the appended bit to the first DCI format is 0.

10. The base station according to any one of claims 7-9, further comprising a transmitting module (54) configured to transmit control information by using the first DCI format with the appended bit.

11. The base station according to any one of claims 7-10, wherein:
the second DCI format is a DCI format 2A, if the current downlink transmission mode is transmission mode 3;
the second DCI format is a DCI format 2, if the current downlink transmission mode is transmission mode 4;
the second DCI format is a DCI format 2B, if the current downlink transmission mode is transmission mode 8; or
the second DCI format is a DCI format 2C, if the current downlink transmission mode is transmission mode 9.

12. The base station according to any one of clams 7-11, wherein the processing module (53) is further configured to append, when the size of the first DCI format with the appended bit is equal to a size of another DCI format corresponding to the current downlink transmission mode, another at least one bit to the first DCI format until the size of the DCI format is different from the size of said another DCI format corresponding to the current downlink transmission mode.

13. A computer program, comprising computer program code, which, when executed by a computer unit, will cause the computer unit to perform the method according to any one of claims 1 to 6.

## Patentansprüche

1. Verfahren zum Senden von Steuersignalisierung, wobei das Verfahren umfasst:
Bestimmen (11, 21, 31) durch eine Basisstation einer Größe eines ersten Downlink-Steuerinformations, DCI,-Formats, das mit einem Uplink-Übertragungsmodus assoziiert ist;
Bestimmen (12, 22, 32) durch die Basisstation eines zweiten DCI-Formats, das einem aktuellen Downlink-Übertragungsmodus entspricht;
Bestimmen durch die Basisstation einer Größe des bestimmten zweiten DCI-Formats;
Vergleichen (13, 23, 33) durch die Basisstation der Größe des ersten DCI-Formats mit der Größe des zweiten DCI-Formats, wobei das erste DCI-Format, das mit dem Uplink-Übertragungsmodus assoziiert ist, ein DCI-Format 4 ist, der Uplink-Übertragungsmodus der Übertragungsmodus 2 ist, der ein Mehrantennenmodus ist, und das zweite DCI-Format, das dem aktuellen Downlink-Übertragungsmodus entspricht, ein DCI-Format 2 oder ein DCI-Format 2A oder ein DCI-Format 2B oder ein DCI-Format 2C ist; und
Anhängen (13, 23, 33) durch die Basisstation mindestens eines Bits an das erste DCI-Format, das mit dem Uplink-Übertragungsmodus assoziiert ist, um die Größe des ersten DCI-Formats verschieden von der Größe des zweiten DCI-Formats zu machen, wenn die Größe des ersten DCI-Formats gleich wie die Größe des zweiten DCI-Formats ist.

2. Verfahren nach Anspruch 1, wobei das Anhängen umfasst: Anhängen eines Bits an das erste DCI-Format.

3. Verfahren nach Anspruch 2, wobei der Wert des an das erste DCI-Format angehängten Bits 0 ist.

4. Verfahren nach einem der Ansprüche 1 bis 3, ferner umfassend:
Senden (14, 24, 34) durch die Basisstation von Steuerinformationen durch Verwenden des ersten DCI-Formats mit dem angehängten Bit.

5. Verfahren nach einem der Ansprüche 1 bis 4, wobei das Bestimmen (12, 22, 32) durch die Basisstation eines zweiten DCI-Formats, das einem aktuellen Downlink-Übertragungsmodus entspricht, umfasst:
Bestimmen, dass das zweite DCI-Format ein DCI-Format 2A ist, wenn der aktuelle Downlink-Übertragungsmodus der Übertragungsmodus 3 ist;
Bestimmen, dass das zweite DCI-Format ein DCI-Format 2 ist, wenn der aktuelle Downlink-Übertragungsmodus der Übertragungsmodus 4 ist;
Bestimmen, dass das zweite DCI-Format ein DCI-Format 2B ist, wenn der aktuelle Downlink-Übertragungsmodus der Übertragungsmodus 8 ist; oder
Bestimmen, dass das zweite DCI-Format ein DCI-Format 2C ist, wenn der aktuelle Downlink-Übertragungsmodus der Übertragungsmodus 9 ist.

6. Verfahren nach einem der Ansprüche 1 bis 5, wobei das Verfahren, wenn die Größe des ersten DCI-Formats mit dem angehängten Bit gleich einer Größe eines anderen DCI-Formats ist, das dem aktuellen Downlink-Übertragungsmodus entspricht, ferner umfasst:
Anhängen durch die Basisstation mindestens eines weiteren Bits an das erste DCI-Format, bis die Größe des DCI-Formats mit dem angehängten Bit verschieden von der Größe des anderen DCI-Formats ist, das dem aktuellen Downlink-Übertragungsmodus entspricht.

7. Basisstation, umfassend:
ein erstes Bestimmungsmodul (51), das so konfiguriert ist, dass es eine Größe eines ersten Downlink-Steuerinformations, DCI,-Formats bestimmt, das mit einem Uplink-Übertragungsmodus assoziiert ist;
ein zweites Bestimmungsmodul (52), das so konfiguriert ist, dass es gemäß einem aktuellen Downlink-Übertragungsmodus ein zweites DCI-Format bestimmt, das dem aktuellen Downlink-Übertragungsmodus entspricht, und eine Größe des zweiten DCI-Formats bestimmt; und
ein Verarbeitungsmodul (53), das so konfiguriert ist, dass es die Größe des ersten DCI-Formats mit der Größe des zweiten DCI-Formats vergleicht, wobei das erste DCI-Format, das mit dem Uplink-Übertragungsmodus assoziiert ist, ein DCI-Format 4 ist, der Uplink-Übertragungsmodus der Übertragungsmodus 2 ist, der ein Mehrantennenmodus ist, und das zweite DCI-Format, das dem aktuellen Downlink-Übertragungsmodus entspricht, ein DCI-Format 2 oder ein DCI-Format 2A oder ein DCI-Format 2B oder ein DCI-Format 2C ist; und, wenn die Größe des ersten DCI-Formats gleich wie die Größe des zweiten DCI-Formats ist, mindestens ein Bit an das erste DCI-Format anhängt, das mit dem Uplink-Übertragungsmodus assoziiert ist, um die Größe des ersten DCI-Formats von der Größe des zweiten DCI-Formats verschieden zu machen.

8. Basisstation nach Anspruch 7, wobei die Basisstation so konfiguriert ist, dass sie beim Anhängevorgang ein Bit an das erste DCI-Format anhängt.

9. Basisstation nach Anspruch 8, wobei ein Wert des an das erste DCI-Format angehängten Bits 0 ist.

10. Basisstation nach einem der Ansprüche 7 bis 9, ferner umfassend ein Sendemodul (54), das so konfiguriert ist, dass es Steuerinformationen durch Verwenden des ersten DCI-Formats mit dem angehängten Bit sendet.

11. Basisstation nach einem der Ansprüche 7 bis 10, wobei:
das zweite DCI-Format ein DCI-Format 2A ist, wenn der aktuelle Downlink-Übertragungsmodus der Übertragungsmodus 3 ist;
das zweite DCI-Format ein DCI-Format 2 ist, wenn der aktuelle Downlink-Übertragungsmodus der Übertragungsmodus 4 ist;
das zweite DCI-Format ein DCI-Format 2B ist, wenn der aktuelle Downlink-Übertragungsmodus der Übertragungsmodus 8 ist; oder
das zweite DCI-Format ein DCI-Format 2C ist, wenn der aktuelle Downlink-Übertragungsmodus der Übertragungsmodus 9 ist.

12. Basisstation nach einem der Ansprüche 7 bis 11, wobei das Verarbeitungsmodul (53) ferner so konfiguriert ist, dass es, wenn die Größe des ersten DCI-Formats mit dem angehängten Bit gleich einer Größe eines anderen DCI-Formats ist, das dem aktuellen Downlink-Übertragungsmodus entspricht, mindestens ein weiteres Bit an das erste DCI-Format anhängt, bis die Größe des DCI-Formats verschieden von der Größe des anderen DCI-Formats ist, das dem aktuellen Downlink-Übertragungsmodus entspricht.

13. Computerprogrammprodukt, umfassend Computerprogrammcode, der bei Ausführung durch eine Computereinheit die Computereinheit veranlasst, das Verfahren nach einem der Ansprüche 1 bis 6 durchzuführen.

## Revendications

1. Procédé pour transmettre des signaux de commande, le procédé comprenant de :
déterminer (11, 21, 31), par une station de base, une taille d'un premier format d'informations de commande de liaison descendante, DCI, associé à un mode de transmission de liaison montante ;
déterminer (12, 22, 32), par la station de base, un second format DCI correspondant à un mode de transmission de liaison descendante actuel ;
déterminer, par la station de base, une taille du second format DCI déterminé ;
comparer (13, 23, 33), par la station de base, la taille du premier format DCI avec la taille du second format DCI, dans lequel le premier format DCI associé au mode de transmission de liaison montante est un format DCI 4, le mode de transmission de liaison montante est le mode de transmission 2 qui est un mode multi-antennes, et le second format DCI correspondant au mode de transmission de liaison descendante actuel est un format DCI 2, ou un format DCI 2A, ou un format DCI 2B, ou un format DCI 2C ; et
ajouter (13, 23, 33), par la station de base, au moins un bit au premier format DCI associé au mode de transmission de liaison montante pour rendre la taille du premier format DCI différente de la taille du second format DCI, lorsque la taille du premier format DCI est la même que la taille du second format DCI.

2. Procédé selon la revendication 1, dans lequel l'ajout comprend d'ajouter un bit au premier format DCI.

3. Procédé selon la revendication 2, dans lequel la valeur du bit ajouté au premier format DCI est 0.

4. Procédé selon l'une quelconque des revendications 1 à 3, comprenant en outre de :
transmettre (14, 24, 34), par la station de base, des informations de commande en utilisant le premier format DCI avec le bit ajouté.

5. Procédé selon l'une quelconque des revendications 1 à 4, dans lequel la détermination (12, 22, 32), par la station de base, d'un second format DCI correspondant à un mode de transmission de liaison descendante actuel comprend de :
déterminer que le second format DCI est le format DCI 2A, si le mode de transmission de liaison descendante actuel est le mode de transmission 3 ;
déterminer que le second format DCI est le format DCI 2, si le mode de transmission de liaison descendante actuel est le mode de transmission 4 ;
déterminer que le second format DCI est le format DCI 2B, si le mode de transmission de liaison descendante actuel est le mode de transmission 8 ; ou
déterminer que le second format DCI est le format DCI 2C, si le mode de transmission de liaison descendante actuel est le mode de transmission 9.

6. Procédé selon l'une quelconque des revendications 1 à 5, dans lequel, lorsque la taille du premier format DCI avec le bit ajouté est égale à une taille d'un autre format DCI correspondant au mode de transmission de liaison descendante actuel, le procédé comprend en outre de :
ajouter, par la station de base, au moins un autre bit au premier format DCI jusqu'à ce que la taille du format DCI avec le bit ajouté soit différente de la taille dudit autre format DCI correspondant au mode de transmission de liaison descendante actuel.

7. Station de base comprenant :
un premier module de détermination (51) configuré pour déterminer une taille d'un premier format d'informations de commande de liaison descendante, DCI, associé à un mode de transmission de liaison montante ;
un second module de détermination (52) configuré pour déterminer, selon un mode de transmission de liaison descendante actuel, un second format DCI qui correspond au mode de transmission de liaison descendante actuel, et pour déterminer une taille du second format DCI ; et
un module de traitement (53) configuré pour comparer la taille du premier format DCI avec la taille du second format DCI, dans lequel le premier format DCI associé au mode de transmission de liaison montante est un format DCI 4, le mode de transmission de liaison montante est le mode de transmission 2 qui est un mode multi-antennes, et le second format DCI correspondant au mode de transmission de liaison descendante actuel est un format DCI 2, ou un format DCI 2A, ou un format DCI 2B, ou un format DCI 2C ; et ajouter, lorsque la taille du premier format DCI est la même que la taille du second format DCI, au moins un bit au premier format DCI associé au mode de transmission de liaison montante pour rendre la taille du premier format DCI différente de la taille du second format DCI.

8. Station de base selon la revendication 7, dans laquelle, dans l'action d'ajout, la station de base est configurée pour ajouter un bit au premier format DCI.

9. Station de base selon la revendication 8, dans laquelle une valeur du bit ajouté au premier format DCI est 0.

10. Station de base selon l'une quelconque des revendications 7 à 9, comprenant en outre un module de transmission (54) configuré pour transmettre des informations de commande en utilisant le premier format DCI avec le bit ajouté.

11. Station de base selon l'une quelconque des revendications 7 à 10, dans laquelle :
le second format DCI est un format DCI 2A, si le mode de transmission de liaison descendante actuel est le mode de transmission 3 ;
le second format DCI est un format DCI 2, si le mode de transmission de liaison descendante actuel est le mode de transmission 4 ;
le second format DCI est un format DCI 2B, si le mode de transmission de liaison descendante actuel est le mode de transmission 8 ; ou
le second format DCI est un format DCI 2C, si le mode de transmission de liaison descendante actuel est le mode de transmission 9.

12. Station de base selon l'une quelconque des revendications 7 à 11, dans laquelle le module de traitement (53) est en outre configuré pour ajouter, lorsque la taille du premier format DCI avec le bit ajouté est égale à une taille d'un autre format DCI correspondant au mode de transmission de liaison descendante actuel, au moins un autre bit au premier format DCI jusqu'à ce que la taille du format DCI soit différente de la taille dudit autre format DCI correspondant au mode de transmission de liaison descendante actuel.

13. Programme informatique, comprenant un code de programme informatique qui, lorsqu'il est exécuté par une unité informatique, amène l'unité informatique à exécuter le procédé selon l'une quelconque des revendications 1 à 6.
